(19)

Europäisches Patentamt

European Patent Office

Office européen des brevets

(11) **EP 2 457 978 A1**

(12) **EUROPEAN PATENT APPLICATION**

(43) Date of publication:
**30.05.2012 Bulletin 2012/22**

(21) Application number: **10192317.5**

(22) Date of filing: **24.11.2010**

(51) Int Cl.:
*C10B 53/02* (2006.01)       *B01J 20/20* (2006.01)
*C09K 17/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Evonik Degussa GmbH 45128 Essen (DE)**

(72) Inventors:
• **Brehmer, Benjamin 44793, Bochum (DE)**
• **Busse, Jens 44879, Bochum (DE)**

(54) **Process for pyrolysis of lignin-rich biomass, carbon-rich solid obtained and use thereof as soil amendment or adsorbent**

(57)    The invention relates to a method for utilizing biomass, in which the biomass is pyrolysed within a temperature range from 550°C to 750°C to obtain driven-out gas and remaining carbon-rich solids. It is an object of the invention to specify a method for utilizing biomass, which is based on comparatively expensive feedstocks, but in return gives products of value with unusually good properties, the proceeds of which make the process economically viable. This object is achieved firstly by the use of biomass which has a lignin content of 10 to 30% by weight and a water content of 5 to 25% by weight, and by virtue of the residence time of the biomass within the temperature range from 550 to 750°C being ten to sixty minutes.

Fig. 13:       Schematic diagram of a reactor for continuous process performance with allocated temperature profile

**Description**

The invention relates to a method for utilizing biomass, in which the biomass is pyrolysed within a temperature range from 550°C to 750°C to obtain driven-out gas and remaining carbon-rich solids.

Biomass is defined as a biological organic material from living, or recently living organisms. It is commonly used as a renewable energy source to replace fossil carbon or hydrocarbon material.

Pyrolysis is a thermo chemical decomposition of organic material at elevated temperatures, substantially in the absence of oxygen. Technically realized pyrolytic processes are often accompanied by incineration of a minor part of the organic material to drive the endothermic pyrolysis by the combustion heat. For this reason, the pyrolytic process is not carried out in total absence of oxygen.

Humans were already pyrolysing biomass in the pre-industrial period:

For instance, charcoal burners subject wood to low-temperature carbonization in a kiln at temperatures below 300°C, such that charcoal remains as carbon-rich solids. However, this pyrolysis does not take place under anaerobic conditions; instead, a portion of the wood used, i.e. the volatile constituents, is combusted in order to attain the pyrolysis temperature.

The original inhabitants of the Amazon region recognized at an early stage that plant and food residues subjected to low-temperature carbonization for weeks gave a pyrolysis coke which can be used successfully as a soil conditioner in agriculture. The Portuguese called this coke "terra preta". Resourceful traders are increasingly attempting to sell "terra preta" - pyrolysed from dubious sources such as used tyres - to European amateur gardeners as a native Indian miracle cure.

It is widespread practice in Japan to pyrolyse kitchen wastes or rice husks, and to utilize the coke obtained as a soil conditioner called "haigoe". Suitable equipment for domestic use is commercially available there.

The traditional ways of producing terra preta as well as haigoe including a step of subjecting fresh biomass to fermentation step prior feeding it into the pyrolysis.

In Germany, biomass is generally not pyrolysed but gasified. The aim of gasification is to obtain carbon-rich fuel gases; the solids which remain are merely inorganic ash.

A common feature of all known approaches to pyrolytic utilization is that they utilize biomass which would not be utilized in another way, for instance freely available waste. The pyrolysis of high-cost biogenic feedstocks has not been conducted overtly to date.

US20080317657A1 discloses a "carbon negative" process for capturing and sequesting atmospheric carbon in the form of char derived from biomass, wherein the biomass is gasified at a temperature between 235 und 650 °C. The water content of the biomass to be used is limited to 60% or less by weight. The lignin content of the feedstock is not discussed; however wood waste is mentioned as a possible source.

CN1752054A discloses a process for producing a porous carrier for pesticides and fertilizisers by calzinating bamboo charcoal at 800- 1200° for 1-3 h.

WO2004037747A2 discloses a process for pyrolysis of biomass releasing a pyrolytic gas in high volatile organic compounds and producing a solid carbon charcoal residue. The temperature remains above 600°C for greater than 10 minutes to minimize the production of surface acid groups. The charcoal produced is used as soil amendment.

JP1 0028861A discloses a process for producing charcoal by calzinating wood powder anaerobically in presence of titanium oxide within a temperature range between 600 and 800 °C. The charcoal is used to remove air polluting substances such as NOx, SOx, CO, or hydrocarbons. It is not intended to use this charcoal for CO2 sequesting purpose or soil amendment.

WO2008076944A discloses a self feeding process for producing biochar in a multiplicity of kilns which are pyrolysed sequentially. The off gases from a preceding kiln are used to feed endothermic pyrolysis of the successional kiln. Since the process is based on wood mixed with domestic and/or industrial waste, the lignin content of feed biomass is low. The percentage of fixed carbon within the char is amounting to 85 %.

Sohi et. al. (Sohi, S., Loez-Capel, E., Krull, E., Bol, R., 2009. Biochar's roles in soil and climate change: A review of research needs. CSIRO Land and Water Science Report 05/09, 64 pp.; available online) summarize current scientifically findings stating that feedstocks with high lignin content produce the highest biochar yields when pyrolysed at moderate temperatures approximating to 500 °C.

In the light of this prior art, it is an object of the invention to specify a method for utilizing biomass, which is based on comparatively expensive feedstocks, but in return gives products of value with unusually good properties, the proceeds of which make the process economically viable.

This object is achieved firstly by the use of biomass which has a lignin content of 10 to 30% by weight and a water content of 5 to 25% by weight, and by virtue of the residence time of the biomass within the temperature range from 550 to 750°C being ten to sixty minutes.

The invention therefore provides a method for utilizing biomass, in which the biomass is pyrolysed within a temperature range from 550°C to 750°C to obtain driven-out gas and remaining carbon-rich solids, wherein the biomass used has a lignin content of 10 to 30% by weight and a water content of 5 to 25% by weight, and wherein the residence time of the biomass within said temperature range is 10 to 60 minutes.

The invention is based on the finding that a particularly high-value biomass, the value of which is characterized by the high lignin content and the low water content, pyrolyses with comparatively long residence times at comparatively high temperatures to give a highly effective soil conditioner, and the pyrolysis gases obtained can be utilized not only as fuel gas but also as synthesis gas.

Lignin is an essential constituent of wood. Lignin-rich biomass which can be used in accordance with the invention originates from wood-forming plants. Preference is given to using a biomass whose lignin content is in the range from 15 to 25% by weight; the water content should be in the range from 10 to 15% by weight.

In practice, commercial wood pellets according to DIN 51731 or DIN 51731 plus which are produced as fuel material on the industrial scale have been found to be a particularly suitable starting material. The lignin content of wood pellets is about 22.7%, while the water content of the pellets examined is 12%. Additionally or alternatively, it is possible to use straw pellets (17% lignin) which are actually intended as litter in animal keeping. Pelletterised stalk from other plants than wheat may be used as well. Early studies show that pelletized garden clippings (rabbit food) or pelletized algae (fish food) are unsuitable for the inventive utilization owing to their low lignin content. The conventionally pyrolytically utilized kitchen or slaughter wastes, manure or sewage sludge are generally too moist and contain barely any lignin.

The biomass used in accordance with the invention will generally be present at ambient temperature (about 20°C). For the purpose of pyrolysis, the biomass is transferred to a reactor (retort) and heated therein to a target temperature in the range from 550°C to 750°C without the addition of air or another atmospheric throughput. Therefore the process is near-anaerobical. In particular, the pyrolysis is carried out in an atmosphere which has a content of oxygen not exceeding 10% by volume. The remaining ingredient of the atmosphere may be nitrogen; its amount should be at least 90% by volume. Ideally, the pyrolysis may be carried out anaerobically, i.e. without the presence of oxygen. However, due to technical difficulties to provide a total hermetic reactor for large quantities at low cost, a little amount of oxygen may be admissible.

The pyrolysis may be carried out near atmospheric pressure conditions (i.e. 1013 hPa). However, elevated pressure (approximately 1 MPa or above) may increase the yield of coke.

Up to a temperature of about 120°C, the moisture is driven out of the biomass; from about 250°C, carbonization sets in. Below a boundary temperature in the range from 120°C to 250°C, the pyrolysis gas is essentially water vapour; above the boundary temperature, the pyrolysis gas consists predominantly of hydrocarbons. It is therefore advantageous to utilize the gases obtained below the boundary temperature energetically as steam, while the gases obtained above the boundary temperature can be utilized not only energetically but also as a raw material. For this purpose, the condensable constituents of the pyrolysis gas can be condensed out as oil or tar, while the uncondensable constituents of the pyrolysis gas can be utilized as fuel gas ("biological natural gas"). Preferably, the fuel gas can be used to provide the thermal energy to drive the endothermic pyrolytic process by firing outside of the reactor.

The oil obtained from the uncondensable constituents of the pyrolysis gas can be converted to synthesis gas by partial oxidation or stream reforming. Synthesis gas is a $CO/H_2$ mixture used as a basic starting material for the chemical industry.

Preferably the pyrolytic process is driven in a manner, that oil obtained from said condensable constituents meets the specification to be used as a feedstock for the production of synthesis gas in current industrial installations. For this reason, the oil should meet the following requirements:

- Hydrogen content at least 5 wt%, preferably 5-15 wt%
- Lower heating value (LHV) greater than 21 GJ/t
- Content of sulphur, chlorine, and other impurities and trace elements lower than 50 ppm

The carbon-rich solids (also called "coke" or "biochar" below) obtained by the pyrolysis according to the inventive method are characterized in a carbon content of 75 to 99% by weight. These solids are an object of the invention, too.

The total content of fixed carbon within in carbon-rich solid should be 75 to 95% per weight to use the solid as an excellent biochar. "Fixed carbon" is defined as a carbon which is not oxidized to $CO_2$ during long term storage of biochar in natural earthy environment. An appropriate method for measuring fixed carbon content is the thermo gravimetric analysis (TGA) as described below.

In the biochar production, yield and elemental composition are very important parameters. They indicate how much and which parts of the input material will be converted into the product, while the rest can be valorized in the energy production. Other characteristics of the biochar should be considered as well, though. In the charcoal and coal industry, one of the most important quality tests is the proximate analysis, describing the behavior and stability of charcoal at high temperatures.

In general, this analysis determines and ash content, and the so-called volatile matter. The fourth part in this analysis can be determined by difference, and is commonly known as fixed-C. This value is an approximation of the graphene carbon content of the biochar, while the volatile matter is the part of the amorphous organic phase that is not transferred into aromatic carbon in further heat treatment. Together, they give a good indication of the quality of charcoal as a solid fuel: a higher moisture and ash content will lower the specific heating value, while the volatile matter will account for smoke formation during the charcoal combustion, both unwanted characteristics (Antal, M. J. J. and Gronli, M. The art, science, and technology of charcoal production. Industrial and engineering chemistry research, 42(8):1619 - 1640, 2003).

The determination of these parameters can be done using two methods. The first is the traditional proximate analysis, using covered crucibles in a muffle furnace and determining the weight loss between the different steps. ASTM standard D1762-84 (ASTM D1762-84: Standard method for chemical analysis of wood charcoal. American society for testing and materials international, www.astm.org 2007) is one of the main standards to perform this analysis on wood charcoals.

The thermo gravimetric analysis (TGA) offers new possibilities by continuously monitoring the weight of a sample as it goes through a predetermined temperature program. This method offers the possibility to determine more parameters, such as the temperature at which the biomass degrades most rapidly. Since the determination of volatile matter requires an anoxic atmosphere, the TGA proximate analysis is mostly performed using a flushing $N_2$ atmosphere. For this reason, results from standard and TGA proximate analysis should not be compared directly. Overall, commercial charcoal for domestic use typically contains 15-30% volatile matter and ash content in the range of 1-5%. Even though these parameters were originally intended to determine charcoal quality, they might also give indications on the expected behavior of biochar in soil systems, since aromatic (fixed) C is a lot less biodegradable than aliphatic and oxygenated compounds in the amorphous organic fraction.

Though the presence of biochar in Terra Preta soils and the carbon dating indicates that it is probably the most persisting form of soil organic matter, freshly produced biochar is known to show significant mass loss at ambient conditions even after months of observation. When added to soil, biochar decay can be composed of several pathways. Oxidation starts on a very short term at the accessible parts of the biochar, and on the long term also occurs within the particles. Biotic decay of both the labile and stable C fraction occurs, while the interaction of biochar particles with soil particles and microorganisms can also have its effect, either stabilizing or destabilizing the biochar. When biochar is applied as a soil amendment and as a means of C sequestration, it is important to understand the expected lifetime of these beneficial effects.

In the research of Cheng et al. (Cheng, C.-H., Lehmann, J., Thies, J. E., Burton, S. D., and Engelhard, M. H. Oxidation of black carbon by biotic and abiotic processes. Organic geochemistry, 37(11):1477 - 1488. 2006), slow pyrolysis char of Robinia pseudoacacia L. (350 °C, 16 h) was incubated at two temperatures (30 and 70 °C), with and without soil, microbial inoculum, nutrient solution and manure amendment. While the samples with microbial inoculum showed no change in the measured oxidation indicators, the pure biochar showed a lower pH in water, a higher O concentration (only at the surface at 30 °C, but also in the bulk of the char at 70 °C) and an increase in the cation exchange capacity. This shows that abiotic oxidation determines the bulk biochar decay in this four month incubation period.

An important consideration to make is the fact that this study used a general microbial inoculum for reproducibility reasons. This way, the lack of biotic decay in this study could be attributed to the fact that this inoculum was not adapted to the decomposition of biochar. Seeing as biochar is a difficult substrate, a considerable lag phase can be expected in the development of the biotic interactions at the biochar surface.

Cheng and Lehmann (Cheng, C.-H. and Lehmann, J.. Ageing of black carbon along a temperature gradient. Chemosphere, 75(8):1021 - 1027 2009) expanded the research on the abiotic decay by incubating biochar samples over a wider range of temperatures (-22 to 70 °C) and again examining them for signs of oxidation after 6 and 12 months. The char samples were white and red oak wood, charred in a mound kiln. All characteristics showed that ageing processes were affected by temperature and changed over time, with higher temperature and longer incubation time enhancing biochar ageing.

Another approach to quantifying the biochar decay rate is to measure its mineralization rate in soil incubation. While this is suitable for substances with a low or medium recalcitrance in soils, the decomposition rate of biochar is too low and any $CO_2$ efflux due to biochar decay is lost in the higher contributions of soil organic matter (SOM) and plant residues mineralization to the $CO_2$. Hamer et al. (Hamer, U., Marschner, B., Brodowski, S., and Amelung, W. Interactive priming of black carbon and glucose mineralization. Organic geochemistry, 35(7):823 - 830 2004) solved this by incubating biochar in sand without organic carbon. The method of Kuzyakov et al. (Kuzyakov, Y., Subbotina, I., Chen, H., Bogomolova, I., and Xu, X. Black carbon decomposition and incorporation into soil microbial biomass estimated by 14c labeling. Soil biology & biochemistry, 41 (2):210 - 219. 2009), using $^{14}$C-labelled biochar incubated in soil and loess for 3.2 years, yields results that are closer to real life situations. Both studies showed an increased metabolisation of biochar by adding glucose to the incubation. This indicates a form of cometabolisation of biochar in the decomposition of organic matter with a higher availability. It can also explain the fact that the estimated decomposition rates from Kuzyakov et al. are 2-3 times higher than those in Hamer et al.: the soil and loess introduced this kind of available SOM for the cometabolisation. Kuzyakov et al. also indicated an increase in the mineralization rate when the incubated soil was intensively mixed. They interpreted this as a result of the protective action of aggregates forming around the biochar. For both the glucose priming and the mixing, the effects in the mineralization rate were only detected in the first two weeks after the treatment. The five repetitions of these treatments in the 3.2 years of incubation did not show a significant effect in the total fraction of biochar that was mineralized.

Over the whole period, and without any of the previous treatments, the biochar mineralization rates strongly decreased during incubation. In the first month, biochar was lost at a rate of 0.016 and 0.024 % d$^{-1}$ for soil and loess, respectively. After one year the mineralization decreased to 0.0012 and 0.0016 % d$^{-1}$, dropping more than one order of magnitude. In total, less than 4.5 % of the $^{14}$C added as biochar was released as $CO_2$ during 3 years. Incorporation of $^{14}$C into microbial biomass after 624 days (1.7 years) of incubation accounted for 2.6 and 1.5% of $^{14}$C input for soil and loess, respectively. The mineralization rates at the end of the 3 year period indicated a decomposition of about 0.5% biochar per year under optimal conditions. Considering about logarithmic decomposition profile, the extrapolated mean residence time of biochar was estimated at 2000 years, with a half-life of about 1400 years (Kuzyakov et al.).

This study, however, does not account for the distinction between readily-degradable biochar and long-term stable biochar (which might be connected to the terms volatile matter and fixed C) that is made in Lehmann et al. It is explained that extrapolation based on data of the initial decomposition period is inaccurate due to the obvious bi-phasal dynamics of the decay. The study reports a biochar $^{14}$C loss of approximately 4.5% to $CO_2$ after three years and 1.5 to 2.5% to microbial biomass after 1.7 years. When the production conditions for the used char are examined (400 °C, 13 h), a volatile matter content of at least 10% can be expected, indicating that not all biochar volatile matter is degraded in this study. Because of this, an additional drop in the mineralization rate can be expected when the volatile matter is completely pyrolysed.

Studies of archaeological biochar offer a chance to estimate the longevity of biochar after the initial oxidation. Cheng et al. (Cheng, C.-H., Lehmann, J., and Engelhard, M. H. Natural oxidation of black carbon in soils: changes in molecular form and surface charge along a climosequence. Geochimica et cosmochimica acta, 72(6):1598 - 1610. 2008) compared samples from eleven former charcoal production sites with char samples produced in charcoal kilns similar to the ones used in the historical locations. These former kilns were especially active around 1870, making these samples approximately 135 years old. The historical biochar was considerably more oxidized than the fresh char samples or the char that was incubated for one year. The parameter showing the main difference was the elemental composition: the O concentration increased from 7.2% in the fresh biochar to 9.2 and 10.6% after 1 year of incubation at 30 and 70 °C, respectively. The incubated samples had a respective C content of 88.2 and 85.8%, compared to 90.8% for the fresh biochar. The historical biochar was far more weathered, showing an average C content of 70.5% and O content of 24.8%. It is clear that the oxidation rate is again positively correlated to the incubation temperature for the short term decay. Thanks to the geographic distribution of the eleven sampled sites, a similar significant positive relationship could be observed between the oxidation level (O/C ratio) of biochar samples and the mean annual temperature (MAT) of the site after their incubation of 135 years (Cheng et al., 2008).

Other studies often observe the biochar cycling in soils where wildfires often occur or have once occurred. From one time events, the recalcitrance of char in soil can be calculated if sufficient data is available about the time of the fire and the amount of char that was made available to the soil at that event. The former can often be determined through historical sources, $^{14}$C-dating of the biochar or a combination of both. The latter, however, often depends on estimates. When fires are a returning event, one can assume a steady-state condition where the input of fresh biochar makes up for the decay losses of char from earlier wildfires. To be able to make such an assumption, the cyclic behavior of these fires should be very constant over the history of the site. Another factor complicating these calculations is the possible burning of char from earlier fires in a new fire.

From the observations and reconstruction of the fire history of a temperate forest on Vancouver Island, Canada, Gavin et al. (Gavin, D. G., Brubaker, L. B., and Lertzman, K. P. Holocene fire history of a coastal temperate rain forest based on soil charcoal radiocarbon dates. Ecology, 84(1):186 - 201. 2003) concluded that the charcoal mass follows a decreasing exponential decay rate after a fire. Preston and Schmidt (Preston, C. M. and Schmidt, M. W. Black (pyrogenic) carbon: a synthesis of current knowledge and uncertainties with special consideration of boreal regions. Biogeosciences, 3(4):397 - 420. 2006) used these data to calculate an average half-life of 6623 years. This high number is of course partly due to the location and climate at the observation point: the low temperatures slow oxidation down, and the wet coastal conditions often provide a water saturated soil, limiting the $O_2$ access to the biochar particles.

The carbon-rich solids obtained by the pyrolysis are particularly suitable as a soil amendment. Owing to the porosity thereof, it accumulates nutrients and microorganisms, such that the plants grow even in highly porous soils. The soil-conditioning effect of the coke obtained in accordance with the invention can be enhanced further by addition of fertilisers such as nitrogen and/or phosphate.

An early study shows that the coke obtainable in accordance with the invention is stable for long periods in the earth; the carbon is not oxidized to $CO_2$. That means that the content of fixed carbon is rather high. This fact enables the use of the coke obtained in accordance with the invention as a carbon dioxide sink: the plant from which the biomass used arises takes up carbon dioxide from the atmosphere while it grows and converts it biochemically to carbohydrates. The carbohydrates present in the biomass are carbonized by the pyrolysis. The $CO_2$ present in the atmosphere is reduced in this way and ultimately fixed in the coke as pure carbon. Since the coke produced in accordance with the invention does not tend to be oxidized on its own, the carbon does not get back into the atmosphere as $CO_2$. The consistent cultivation of biomass, coking thereof and deposition thereof in the earth is therefore capable of reducing the concentration of $CO_2$, which is considered to be harmful to the climate, in the atmosphere.

The invention therefore also comprises the use of the solids obtainable by the process according to the invention as a soil amendment.

The solids obtained in accordance with the invention, owing to their porosity, can additionally be used as an adsorbent like activated carbon. Especially suitable for this purpose are the dust fractions of the coke.

The invention therefore also comprises the use of the solids obtainable by the process according to the invention as an adsorbent.

Yet another object of the invention is a method for reducing the amount of $CO_2$ within the Earth's atmosphere, comprising the following steps:

a) cultivating plants providing a biomass with a lignin content of 10 to 30% by weight;
b) harvesting said plants and separating said biomass therefrom;
c) drying said biomass when indicated to obtain a biomass with a water content of 5 to 25% by weight;
d) pyrolysing said biomass within a temperature range from 550°C to 750°C to obtain driven-out gas and remaining carbon-rich solids for a residence time within said temperature range from 10 to 60 minutes;
e) storing of carbon-rich solid as obtained in the soil.

Further preferred configurations of the invention are evident from the set of claims and from the working example, on the basis of which the invention is now to be illustrated in detail.

The effect of the highest treating temperature (HTT) and residence time on different biochar parameters is investigated for four different input materials and slow pyrolysis conditions. To attain this, the experiment was set up as a $2^2$ full factorial design to correlate all results to the two main factors: HTT and residence time. Since the influence of temperature is not expected to be linear over the temperature range that was studied, the design was expanded to contain four temperatures (300, 450, 600 and 750 °C) and two residence times (10 and 60 min). This is combined with a triple repetition of the average conditions for each of the factors (525 °C and 35 min) to check the reproducibility of the experiments and the linearity of the response to the time variable. The examined characteristics of the char were: yield, proximate analysis, thermo gravimetric analysis (TGA), elemental composition, higher heating value (HHV), pH in solution, Brunauer-Emmet- Teller (BET) surface area, biological oxygen demand (BOD) and carbon mineralization rate (CMR).

Four biomass input materials were selected for this experiment: commercial wood pellets, straw, green waste and algae. Because of homogeneity (green waste) and differences in size distribution (algae vs. other input materials), pelletized materials were considered to ensure more comparable conditions in the pyrolysis reactor.

The wood pellets were obtained from a commercial wood pellet producer (Stelmet, 20 Zielona Gora, Poland). They were pellets of pine and spruce wood of DIN 51731 plus quality, and dried at 100 °C before pelletisation. Wheat straw was also collected in the form of commercial pellets used as animal bedding material (Strovan, Kortrijk, Belgium). Both the wood and straw pellets were stored at ambient temperature and air humidity.

Green waste was obtained from a garden contractor as shredded leaves, twigs and branches of mainly coniferous trees and shrubs. After a storage period of 1 month in a freezer (-18 °C), the biomass was ground in a cutting mill (SM 2000, Retsch GmbH, Haan, Germany) to pass a 2 mm screen and cold pelletized in a laboratory pellet press (Monoroll Labor, Simon-Heesen). The produced pellets were air dried with forced convection for an hour, and then stored in polypropylene containers at -18 °C due to their sensitivity to microbial decay.

Algae were collected as spray-dried and vacuum packed fish food powder (Hatchmax Diafeed, SBAE Industries, Evergem, Belgium). This powder was not compatible with the laboratory press used for the green waste, and so the algae were compressed using a hand pelletizer (Pellet Press, Parr Instrument Company, Moline, IL). These pellets had other dimensions than the other biomass types. The wood, straw and green waste pellets all had a 6mm diameter and were about 10 - 20mm long. The algae pellets had a 15mm diameter and were about 8mm long. The biomass was kept in the vacuum packaging until a few days before pyrolysis. Once pelletized, the algae were stored in a closed polypropylene container at ambient temperature.

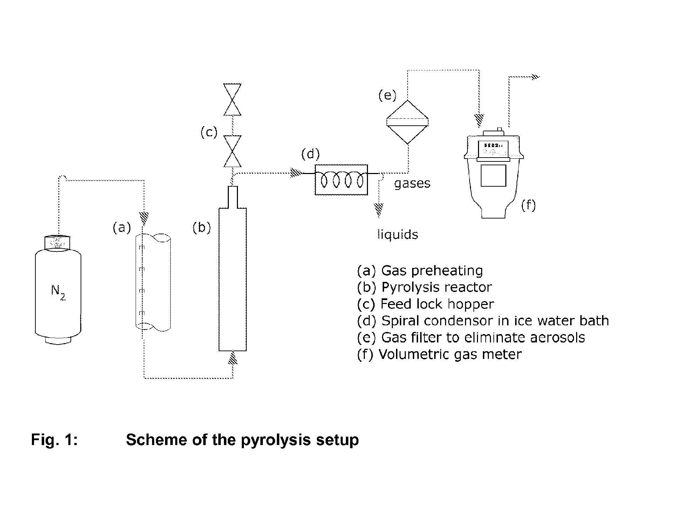

The pyrolysis experiments were performed in a vertical stainless steel reactor tube (3.8 cm inner diameter, 30 cm height) (Fig. 1). The biomass pellets were added in a packed bed of 25 cm high. Due to different bulk densities, this made a difference in the input weight of each biomass: approximately 135, 100, 70 and 70 grams were used per experiment for respectively wood, straw, green waste and algae. The biomass was flushed with nitrogen gas at a flow rate of 800 ml / min for 10 min before heating to create an inert atmosphere.

The heating of the reactor tube and the preheating of the nitrogen gas was performed by close fitting electrical heating elements and controlled by a thermocouple at the reactor surface. The reactor was heated at the maximum heating rate of the setup, which was around 17 °C min$^{-1}$. After the residence time at the HTT, the setup was cooled under nitrogen flow and the produced biochar was stored in polypropylene containers at -18 °C. Before any further analysis, the size of the char samples was reduced by passing them through a double roller crusher (MIAG GmbH, Braunschweig, Germany) that had two corrugated rolls with a roll gap of 1 mm.

The ASTM proximate analysis method for wood charcoals, D1762-84 (ASTM, 2007) is applied in duplicate to determine moisture (at 105 °C), volatile matter (covered crucible at 950 °C), ash content (uncovered, at 750 °C) and fixed C (by difference). The samples were analyzed in porcelain crucibles and were not ground further before analysis. The elemental analysis was performed in duplicate using a Flash 2000 Elemental Analyzer (Thermo Fisher Scientific, Waltham, MA). The samples (1 - 5 mg) were burned at 1800 °C, leading the decomposition gases over oxidating catalysts. Chromatography separates the gases before the detector. This way, the C, H and N content can be quantified. O was not determined because of the interference of inorganic oxides in the ash (especially since this ash contents varied from less than 1 to more than 40% of the biochar weight). For this analysis, the samples were ground to powder using a stainless steel rod in a glass vial.

The TGA method was applied scarcely as a cross-check for the ASTM proximate analysis method for a selection of biochar samples. The fully-automated device employed was a Netsch TG 209, set at a maximum temperature of 950°C. NETZSCH thermobalances fulfill the respective instrument and applications standards, e.g. ISO 11358, ISO/DIS 9924, ASTM E 1131, ASTM D 3850, DIN 51006.

The HHV of chars and input materials was determined using an oxygen bomb calorimeter 6200 with oxygen bomb 1108 (Parr Instrument Company, Moline, IL) following the instructions of Parr sheet no. 205M, 207M and 442M. No further size reduction was needed for this analysis.

The pH of biochar was measured in duplicate in 1:10 w/v ratio in a 0.1 N KCl solution using a Thermo Orion model 420 (Thermo Fisher Scientific, Waltham, MA). The char was first suspended in the solution, left to equilibrate for 10 minutes, stirred and measured. Measuring the pH in KCl gives the potential pH, as the higher ionic strength could release exchangeable protons of biochar into solution (Cheng and Lehmann, 2009).

The BET specific surface area was measured by nitrogen gas adsorption at 77K using a Strohlein Areameter II (CIS Ingenieurburo Seifert, Dresden, Germany) according to DIN 66132, a single-point method. Samples were degassed at 100 °C under continuous nitrogen flow for 24h prior to analysis. This analysis was performed in duplicate on a restricted set of samples, to observe the effect of HTT and residence time on the wood biochar samples, and the effect of input material on the biochar samples that were produced at 60 minutes and 450 and 600 °C.

The BOD test is a biological oxidation decay test typically used in wastewater treatment, measuring the amount of oxygen that is used for the biological oxidation of a sample. The amount of oxygen needed to fully oxidate the sample is normally measured as chemical oxygen demand (COD), using chemical oxidants at harsher conditions. This value can also be calculated from an average elemental macrocomposition of biochar (with 80 wt% C, 15 wt% O and 3 wt% H) to be approximately 2.2 g $O_2$ per gram of biochar. Estimating that the BOD would maximally be 3% of the COD, a solution of 2:6 g finely ground biochar per liter was used in a 1:1 v/v ratio headspace/solution to have enough $O_2$ available for the expected decomposition. Minerals were added, the pH of the solution was adapted to 7.2 using 1N NaOH or 1N HCl and a microbial inoculum (from a soil sample) was added. During the two week period of incubation at 20 °C, the produced $CO_2$ is absorbed by soda lime pellets, resulting in a net pressure drop that is measured by the pressure sensor in the incubation bottle head (LabMET, 2010). The degradation tests were performed for all samples produced at 450 and 600 °C, for 10 and 60 min. For wood biochar, the 300 °C, 60 min and the 750 °C, 10 min samples were also analyzed.

The soil used for these incubation tests was a sandy loam soil from Lendelede, Belgium, selected for its low organic carbon content (7.1 g C kg$^{-1}$) to reduce the interference between soil carbon and biochar mineralization. The land lot was used as arable farming land and had an average composition of 50% sand, 43% silt and 7% clay (weight based). The specific density was 1.59 kg dm$^{-3}$ and it had a pH in KCl of 5.33. For the incubation, about 250 g of dry soil (sieved on a 2mm sieve) was used per sample and compacted to field density. Biochar was added at a rate of 14 g biochar per kg dry soil. This is approximately 50 ton/ha, using a soil depth of 30 cm. Water was added to obtain 50% water filled pore space (WFPS) and the jars were incubated at 25 °C. Respiration of soil and soil-biochar mixtures was measured by incubating them in airtight glass jars. CO2 generated by the sample was absorbed in a 0.5M NaOH solution and quantified by titration using 0.5M HCl in an automatic titrator (702 SM Titrino, Metrohm, Herisau, Switzerland). 2 ml 0.5M $BaCl_2$ was added to precipitate interfering carbonates, and the sample is titrated to a pH of 8.3. Replacing and measuring of the NaOH solution happened at different intervals depending on the expected respiration rate, ranging from every 2 days at the start of the incubation to over a week at the end of the incubation. During this change, the jars were left open for while, to replenish the oxygen content in the headspace. The total incubation time was 40 or 42 days, since one batch of tests was started two days later than the other. As with the BET measurement, this analysis was performed on a selection of samples, similar to the selection for the BET analysis.

The results of the biochar yield of the slow pyrolysis process are presented in table 1.

**Table 1:** Biochar yield in wt% daf

| Residence time (min) | Highest treatment temperature (°C) | | | | |
|---|---|---|---|---|---|
| | 300 | 450 | 525 | 600 | 750 |
| Wood | | | | | |
| 10 | 89.8 | 29.2 | - | 24.4 | 23.0 |
| 35 | - | - | 24.8 | - | - |
| 60 | 43.7 | 27.0 | - | 23.3 | 22.7 |
| Straw | | | | | |
| 10 | 94.8 | 28.5 | - | 25.4 | 23.7 |
| 35 | - | - | 25.6 | - | - |
| 60 | 36.8 | 27.5 | - | 25.2 | 24.4 |
| Green waste | | | | | |
| 10 | 98.4 | 31.3 | - | 24.9 | 26.4 |
| 35 | - | - | 26.0 | - | - |
| 60 | 48.6 | 27.8 | - | 24.4 | 23.7 |
| Algae | | | | | |
| 10 | 72.8 | 28.4 | - | 24.1 | 21.0 |
| 35 | - | - | 23.9 | - | - |
| 60 | 50.1 | 25.0 | - | 22.9 | 19.3 |

Note to table 1: Standard deviation on the triplicate central experiments was 0.23, 0.18, 0.91 and 0.28% for wood, straw, green waste and algae, respectively.

Each biomass type shows a similar negative correlation for yield and HTT, and for yield and residence time. The experiments at 300 °C, 10 min show very high yields and had a very similar, yet darker appearance when compared to the untreated biomass. All longer residence times and higher temperatures resulted in pitch black biochar. At temperatures of 450 °C and higher, green waste yielded the highest amount of biochar, followed by straw, wood and algae.

To quantify the correlations, the variables were recoded: HTT became -3, -1, 0, 1 and 3 for respectively 300, 450, 525, 600 and 750 °C, while residence time became -1, 0 and

1 for respectively 10, 35 and 60 min. Next, a multivariate linear regression was performed to calculate the influence of the recoded factors HTT, residence time and their interaction effect on the dependent variable yield for each of the biomass types. The coefficients of this regression can be found in table 2.

**Table 2:** Coefficients for the linear regression of yield in relation to the recoded factors HTT and residence time

| Type | Intercept | HTT | time | HTT:time | $R^2$ |
|---|---|---|---|---|---|
| Wood | 0.3248 | -0.0680 | -0.0621 | 0.0346 | 0.6647 |
| Straw | 0.3302 | -0.0640 | -0.0731 | 0.0441 | 0.6579 |
| Green waste | 0.3487 | -0.0751 | -0.0706 | 0.0361 | 0.6449 |
| Algae | 0.3047 | -0.0636 | -0.0361 | 0.0163 | 0.6886 |

For the wood, green waste and algae samples, temperature had the biggest influence on the char yield, followed by the residence time. For the straw samples, the residence time had a bigger influence on the biochar yield. The values for the $R^2$ of the regression (0.6 - 0.7) indicate that these factors alone do not explain all variability in the biochar yield; other, non-controlled variables will also have their influence.

When drying at 105 °C for 2 hours, as ASTM (2007) prescribes, the char samples all gained approximately 1% of their initial weight, indicating that the conditions during storage prevented the samples from humidifying. The humidities of the input materials were 5.84, 7.99, 31.64 and 5.32% for respectively wood, straw, green waste and algae. The ash (dry basis) and fixed-C (dry and ash-free (daf)) content can be found in respectively table 3 and table 4. These are the means of the duplicate determinations. The volatile matter content dry and ash free $VM_{daf}$ can be calculated as $VM_{daf} = 1 - fixC_{daf}$

| Table 3: Biochar ash content in wt% (dry basis) | | | | | |
|---|---|---|---|---|---|
| **Highest treatment temperature (°C)** | | | | | |
| **Residence time** (min) | **300** | **450** | **525** | **600** | **750** |
| Wood (unheated: 0.2%) | | | | | |
| 10 | 0.3 | 1.0 | - | 1.2 | 1.1 |
| 35 | - | - | 1.0 | - | - |
| 60 | 0.5 | 1.2 | - | 1.3 | 1.1 |
| Straw (unheated: 7.9%) | | | | | |
| 10 | 8.0 | 22.4 | - | 24.5 | 26.2 |
| 35 | - | - | 24.4 | - | - |
| 60 | 19.1 | 22.9 | - | 24.5 | 25.8 |
| Green waste (unheated: 3.5%) | | | | | |
| 10 | 3.6 | 11.1 | - | 13.2 | 13.9 |
| 35 | - | - | 12.6 | - | - |
| 60 | 6.8 | 12.0 | - | 13.4 | 13.4 |
| Algae (unheated: 38.4%) | | | | | |
| 10 | 46.3 | 68.6 | - | 72.2 | 74.8 |
| 35 | - | - | 72.1 | - | - |
| 60 | 55.8 | 71.8 | - | 73.0 | 76.4 |
| Note to table 3: Standard deviation on the triplicate central experiments was 0.031, 0.247, 0.623 and 0.287% for wood, straw, green waste and algae, respectively. | | | | | |

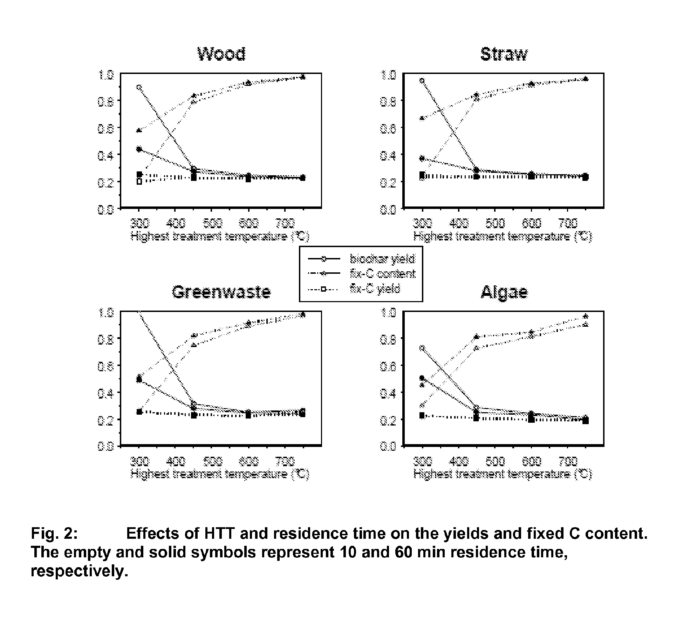

The ash content shows an important increase in the pyrolysed samples, which was expected as ash remains in the solid fraction while the organic matter undergoes drastic reformation and decomposition. The calculated ash yields (not shown) support this theory, as they were > 98% for wood, green waste and algae and > 95% for straw biochar. Algae biomass already has a large inorganic fraction, yet it almost doubles to be approximately three quarters of the mass of algae biochar produced at 750 °C. The fixed C content of the biochars increased with HTT and residence time, as was indicated by the literature. Combination of the yield and proximate analysis results gives a good graphic overview of the effect of temperature and residence time on the biochar yield and the relative and absolute amount of fixed C that is produced (Fig. 2). Here we can see that the increase of fixed C content and the decrease of the biochar yield for higher HTT make up for each other, resulting in an almost constant fixed C yield (fixed C over input mass, both on a daf basis). For the central conditions, this fixed C yield was 22.1, 23.4, 22.8 and 19.5% for wood, straw, green waste and algae, respectively.

**Table 4:** Biochar fixed carbon content in wt% daf

| Residence time (min) | Highest treatment temperature (°C) | | | | |
|---|---|---|---|---|---|
| | 300 | 450 | 525 | 600 | 750 |
| Wood (unheated: 18.2%) | | | | | |
| 10 | 22.0 | 78.6 | - | 91.8 | 97.4 |
| 35 | - | - | 89.3 | - | - |
| 60 | 57.4 | 83.2 | - | 93.6 | 97.4 |
| Straw (unheated: 21.8%) | | | | | |
| 10 | 23.7 | 80.6 | - | 91.2 | 95.8 |
| 35 | - | - | 91.4 | - | - |
| 60 | 66.5 | 84.1 | - | 92.6 | 95.9 |
| Green waste (unheated: 23.5%) | | | | | |
| 10 | 25.7 | 74.7 | - | 88.5 | 96.5 |
| 35 | - | - | 87.7 | - | - |
| 60 | 51.4 | 81.5 | - | 91.2 | 98.1 |
| Algae (unheated: 20.4%) | | | | | |
| 10 | 30.0 | 72.5 | - | 81.1 | 89.9 |
| 35 | - | - | 81.4 | - | - |
| 60 | 44.8 | 80.9 | - | 84.3 | 96.1 |

Note to table 4: Standard deviation on the triplicate central experiments was 0.90, 0.51, 0.68 and 1.16% for wood, straw, green waste and algae, respectively.

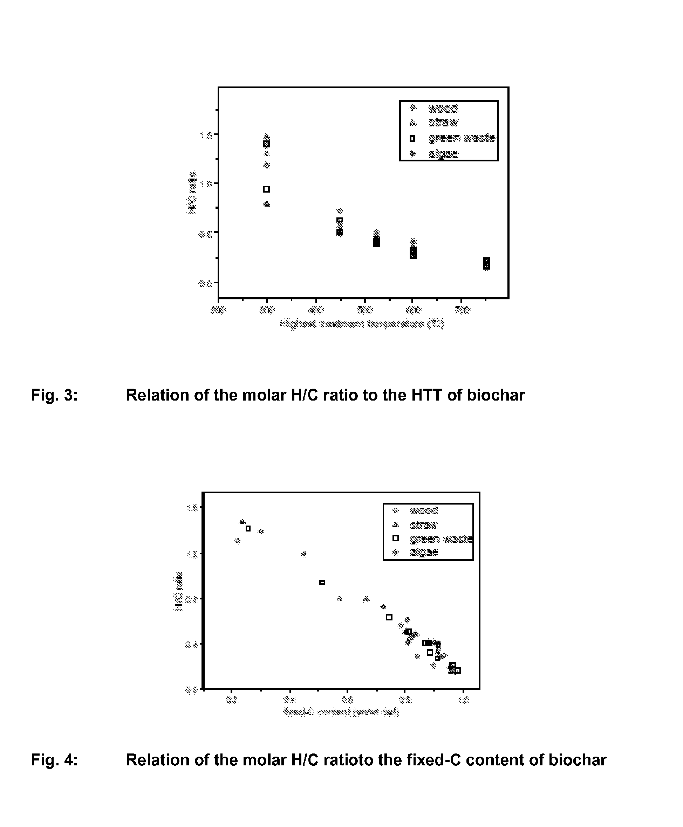

The mean results from the duplicate determination of carbon and hydrogen content can be seen in tables 4.5 and 4.6, respectively. These show a gradual evolution from the biomass composition to the high-carbon, low-hydrogen composition of biochar produced at 750 °C. The best way to follow up on this process is through elemental ratios like H/C. Figure 3 shows the declining evolution of this ratio as the HTT increases. It is also very noticeable that any differences that may exist between the different biomass types are lost as the carbonization conditions get more extreme. At 750 °C all samples have a similar H/C, approximately 0.18, independent of the biomass type.

Figure 4 shows the relation between this ratio and the fixed-C content of the biochar. This shows a very linear behavior, which was quantified by a linear regression (Eq. 1).

$$H/C = 1:8334 - 1:6575 * fixC_{daf} \qquad (Eq. 1)$$

In equation Eq 1, H=C is the mol/mol ratio, and $fixC_{daf}$ is the mass fraction on daf basis. The $R^2$ for this regression is 0.96.

**Table 5:** Biochar carbon content in wt% daf

| Residence time (min) | Highest treatment temperature (°C) | | | | |
|---|---|---|---|---|---|
| | 300 | 450 | 525 | 600 | 750 |
| Wood (unheated: 50.9%) | | | | | |
| 10 | 54.1 | 82.5 | - | 90.0 | 92.5 |
| 35 | - | - | 88.6 | - | - |
| 60 | 71.3 | 86.3 | - | 92.3 | 92.5 |

(continued)

| Residence time (min) | 300 | 450 | 525 | 600 | 750 |
|---|---|---|---|---|---|
| Straw (unheated: 48.7%) | | | | | |
| 10 | 50.3 | 84.1 | - | 90.1 | 92.2 |
| 35 | - | - | 89.3 | - | - |
| 60 | 76.2 | 86.4 | - | 90.3 | 93.7 |
| Green waste (unheated: 55.4%) | | | | | |
| 10 | 53.2 | 78.8 | - | 87.7 | 87.5 |
| 35 | - | - | 86.8 | - | - |
| 60 | 69.3 | 82.9 | - | 88.4 | 93.2 |
| Algae (unheated: 54.2%) | | | | | |
| 10 | 62.7 | 74.5 | - | 80.1 | 86.4 |
| 35 | - | - | 80.3 | - | - |
| 60 | 69.5 | 78.7 | - | 83.4 | 90.6 |

Note to table 5: Standard deviation on the triplicate central experiments was 1.18, 0.27, 0.30 and 1.01% for wood, straw, green waste and algae, respectively.

**Table 6:** Biochar hydrogen content in wt% daf

| | Highest treatment temperature (°C) | | | | |
|---|---|---|---|---|---|
| **Residence time** (min) | **300** | **450** | **525** | **600** | **750** |
| Wood (unheated: 6.53%) | | | | | |
| 10 | 5.88 | 3.84 | - | 2.63 | 1.44 |
| 35 | - | - | 3.00 | - | - |
| 60 | 4.70 | 3.49 | - | 2.28 | 1.13 |
| Straw (unheated: 6.62%) | | | | | |
| 10 | 6.17 | 3.58 | - | 2.40 | 1.55 |
| 35 | - | - | 2.97 | - | - |
| 60 | 5.03 | 3.50 | - | 2.11 | 1.23 |
| Green waste (unheated: 8.10%) | | | | | |
| 10 | 6.23 | 4.15 | - | 2.33 | 1.54 |
| 35 | - | - | 2.91 | - | - |
| 60 | 5.42 | 3.51 | - | 2.01 | 1.26 |
| Algae (unheated: 8.20%) | | | | | |
| 10 | 7.23 | 4.49 | - | 2.73 | 1.51 |
| 35 | - | - | 3.13 | - | - |
| 60 | 6.87 | 3.98 | - | 2.00 | 1.44 |

Note to table 6: Standard deviation on the triplicate central experiments was 0.041, 0.094, 0.029 and 0.160% for wood, straw, green waste and algae, respectively.

The calorimetric determinations in table 7 show a difference between two groups of biochars. On the one hand, there is the wood, straw and green waste biochar, where a more intense thermo chemical treatment (HTT, residence time) increases the energy density, while the net energy yield decreases with the mass loss. For algae biochar on the other hand, the yield also decreases at higher temperatures and longer times, yet this causes a decrease in energy density.

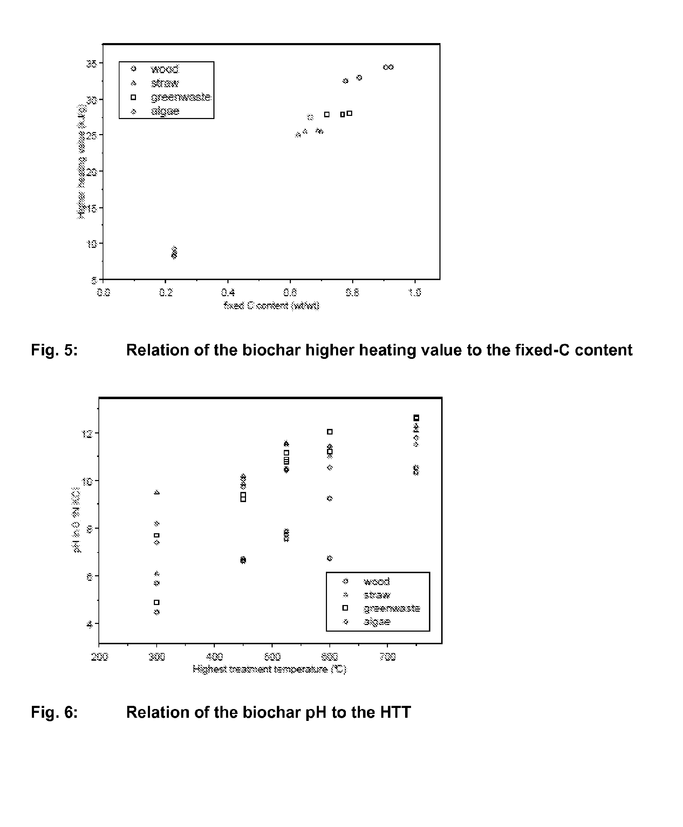

Figure 5 shows that the HHV is another parameter that shows an obvious correlation to the fixed C content. The linear regression quantifies this relation in equation 2.

$$HHV = 0:1270 + 38:1698 * fixC_{dry} \qquad\qquad (Eq.\ 2)$$

In equation Eq. 2, HHV is in kJ $g^{-1}$ while $fixC_{dry}$ is the fixed C content in mass fraction, dry base. The $R^2$ for this regression is 0.98.

**Table 7:** Biochar higher heating value in kJ $g^{-1}$, the number between the brackets is the yield of energy from biomass to biochar

| Residence time (min) | Highest treatment temperature (°C) | |
|---|---|---|
| | 450 | 600 |
| Wood (unheated: 19.1) | | |
| 10 | 32.5 (47.1 %) | 34.4 (41.7%) |
| 60 | 32.9 (44.3%) | 34.4 (40.0%) |
| Straw (unheated: 16.3) | | |
| 10 | 25.1 (47.8%) | 25.6 (44.8%) |
| 60 | 25.5 (47.3%) | 25.5 (44.1 %) |
| Green waste (unheated: 14.0) | | |
| 10 | 27.5 (45.6%) | 27.9 (37.8%) |
| 60 | 27.9 (41.5%) | 28.0 (37.1 %) |
| Algae (unheated: 14.0) | | |
| 10 | 9.22 (34.9%) | 8.29 (29.9%) |
| 60 | 8.68 (32.2%) | 8.17 (29.0%) |

The results of this analysis, as shown in figure 6, display an obvious trend of the pH to increase as the thermo chemical treatment is intensified. Differences can be observed for the biomass types: especially wood has an average pH in solution that is in general two units lower than the values for the three other types.

The results of the BET surface area analysis are presented in Table 8. Part (a) shows the data for wood biochar, and serves to interpret the influence of the HTT and residence time on the surface area of the samples. At low temperatures (300 and 450 °C), surface area is generally low, yet it increases with higher residence times. At 600 °C more accessible surface is created, but an inverse relationship between surface area and residence time is observed. When the temperature is increased further, the surface area declines for the 10 min residence time. Part (b) shows that the wood biochar clearly offers the highest potential when it comes to surface area. When these values are compared to the ash content in table 3, it is clear that a higher amount of inorganics does not stimulate extra surface area creation.

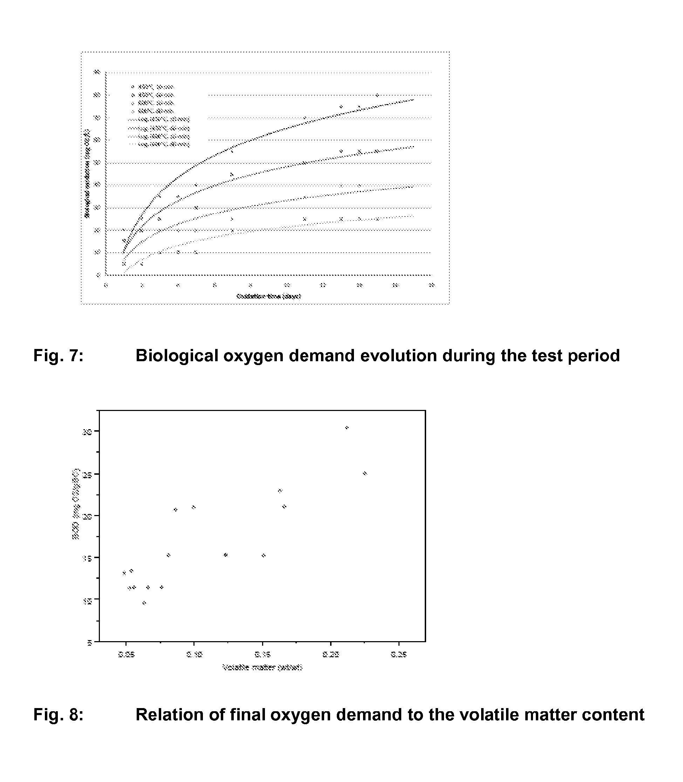

The used method to determine the amount of biological oxidation had a low resolution, yet it showed a logarithmic decay profile over time (Fig. 7). It shows that the oxidation rate was highest for the lowest temperatures and residence times, a trend that was observed in each of the biomass types. To compare the data for different biochar types, table 9 gives an overview of the fraction of biochar that was oxidized in the two week period. Algae biochar was apparently easiest to degrade in this setup, followed by respectively green waste, wood and straw.

A linear relation between the biological degradability and the volatile matter content was also observed and quantified by linear regression (Fig. 8, Eq. 3).

$$BOD = 7:3434 + 87:7555 * VM_{dry} \qquad (3)$$

In equation Eq 3, BOD is expressed as $mgO_2\ g^{-1}$ BC, and $VM_{dry}$ is the volatile matter content, expressed as the mass fraction on a dry basis. The $R^2$ for this regression is 0.73, indicating that part of the resulting variability is not explained by this relation.

**Table 8:** Biochar BET specific surface area in $m^2 g^{-1}$.

*(a) Wood biochar*

| | Highest treatment temperature (°C) | | | |
|---|---|---|---|---|
| **Residence time** (min) | **300** | **450** | **600** | **750** |
| 10 | - | 4 | 196 | 128 |
| 60 | 6 | 23 | 127 | - |

*(b) Residence time = 60 min*

| | Biomass input material | | | |
|---|---|---|---|---|
| **HTT** (°C) | **Wood** | **Straw** | **Green waste** | **Algae** |
| 450 | 23 | 16 | 17 | 14 |
| 600 | 127 | 22 | 46 | 19 |

- : No data recorded

**Table 9:** Amount of biochar C oxidised after two weeks of BOD incubation *(% BOD/COD$_{th}$)*

| | Biochar production conditions | | | |
|---|---|---|---|---|
| **Input material** | **450 °C, 10 min** | **450 °C, 60 min** | **600 °C, 10 min** | **600 °C, 60 min** |
| Wood | 1.30 | 0.86 | 0.61 | 0.38 |
| Straw | 0.81 | 0.80 | 0.60 | 0.60 |
| Green waste | 1.23 | 1.10 | 0.99 | 0.54 |
| Algae | 2.94 | 2.07 | 2.06 | 1.81 |

$COD_{th}$: theoretical COD value based on elemental composition

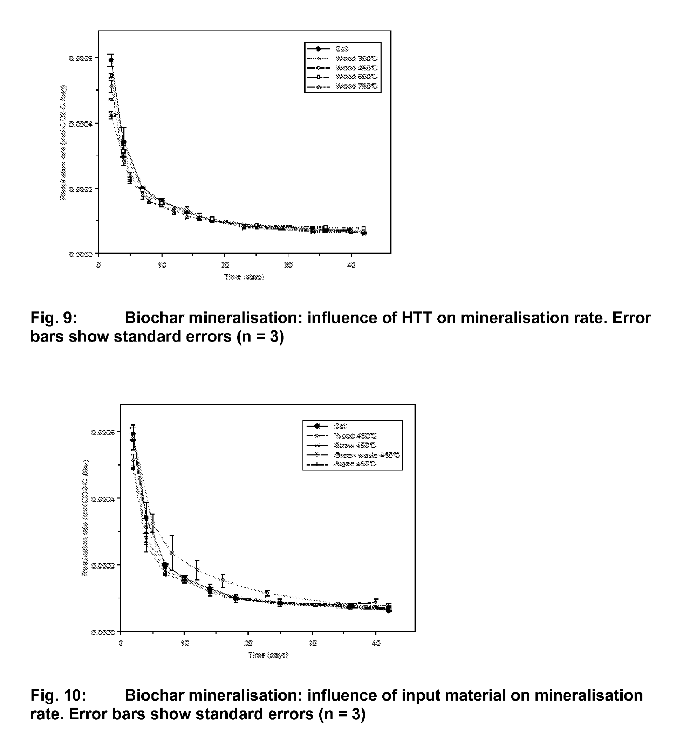

Figure 9 and 10 show the results for the mineralization rate. In general, the experiments had a good reproducibility, as can be seen from the error bars (n=3), and the resulting profiles are mostly uniform, showing an exponentially decreasing rate. From these two figures, it can be observed that practically all incubations with added biochar show a slightly decreased mineralization rate with respect to the soil incubation at the first three weeks of incubation. Some samples (straw, algae, and wood 600 °C) show a slight increase after this initial lag phase, the others take a little longer to show signs of increased decay rates. The main exception to this profile is green waste, which is seen in figure 10 to be the only sample to show an increased mineralization rate with respect to the soil incubation.

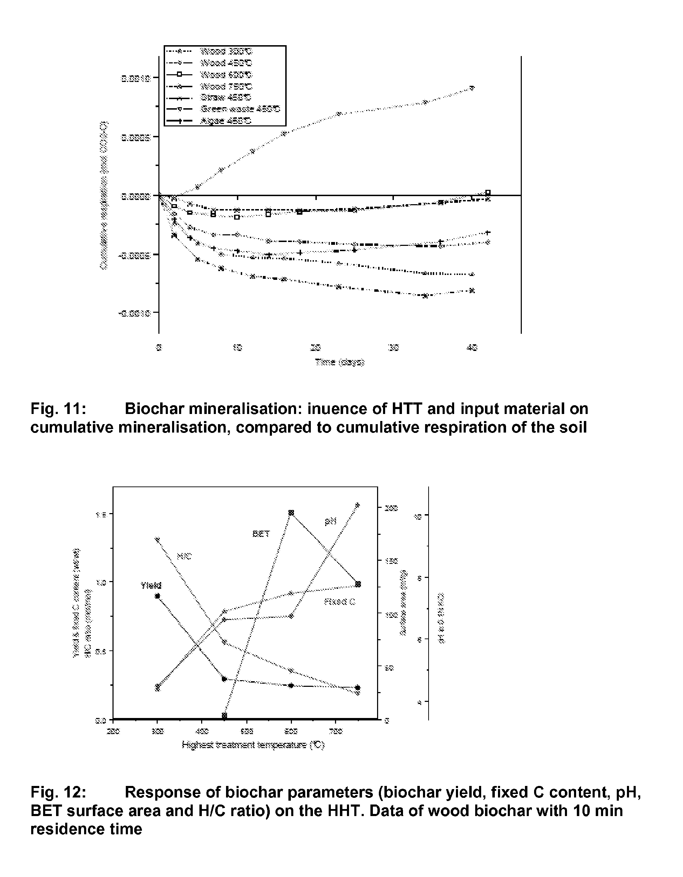

The result of these rate profiles can be observed in figure 11, which shows the evolution of the cumulative respiration of the samples over time, when compared to the soil incubation (difference = treatment - control). The green waste sample is the only one showing a clear increase in the total C that was mineralized, while the straw and wood-600 °C samples returned to the level of the control sample after 6 weeks of incubation. To put the values into context: the cumulative respiration at day 40 for green waste and wood 750 °C, the top and bottom curve, is a deviation from the soil cumulative respiration of approximately +16% and -15%, respectively.

An overview of the total amount of C in a soil incubation and the amount that was mineralized is available in table 10. Since the biochar application rate was chosen on a mass basis, the amount of C added as biochar was different for each sample. This is also the main effect that can be observed in the total C fraction mineralized: this fraction decreases as more biochar is added, since the respiration rates remained quite similar, regardless of biochar addition.

**Table 10:** Source of carbon per incubation sample and total carbon mineralisation after 42 days of CMR incubation

| Sample | Soil organic C (mol) | Biochar C (mol) | fraction of total C mineralised (%) |
|---|---|---|---|
| Soil | 0.150 | 0.000 | 3.75 |
| Wood 300 °C | 0.150 | 0.212 | 1.33 |
| Wood 450 °C | 0.150 | 0.257 | 1.29 |

(continued)

| Sample | Soil organic C (mol) | Biochar C (mol) | fraction of total C mineralised (%) |
|---|---|---|---|
| Wood 600 °C | 0.150 | 0.273 | 1.34 |
| Wood 750 °C | 0.150 | 0.276 | 1.10 |
| Straw 450 °C | 0.150 | 0.199 | 1.60 |
| Green waste 450 °C | 0.150 | 0.218 | 1.74 |
| Algae 450 °C | 0.150 | 0.067 | 2.46 |

The ash yield that was reported in this example, showed a slight loss during the pyrolysis: about 5% for the straw chars, and about 2% for the other chars. Since no additional ash characterization was performed, it is hard to indicate with certainty what the main reason was. The most volatile inorganics present in biomass are potassium (K) and chlorine (Cl), who volatilize quite easily even at low to medium pyrolysis temperatures. Since wheat straw is reported to generally have a high K content compared to the other input biomass types, this might explain the difference that was observed.

Another important observation in this example was the fixed C yield, which proved to be practically constant for each of the temperatures. The differences between the biomass types might be related to their lignin content, as algae (with the lowest fixed C yield) lack this substance.

The H/C ratios resulting from this example also indicates how many carbon atoms on average are connected to a hydrogen atom, thereby estimating the average size of the polyaromatic condensated graphene sheets, which is also a measure of the biochar's stability.

The linear correlation that was obtained for the H/C and the fixed C content shows that the volatile matter that is volatilized during the pyrolysis will show a higher H/C than the remaining biochar, and will remove most of the H from the biochar as the reaction takes place.

One of the most remarkable observations in this example was the lack of energy densification in the algae biochar. This can be attributed to the very large ash content, though. There is in fact energy densification taking place in the organic matter of the biochar, yet the pyrolysis reduces the share of the organic matter from 62 % to a mere 25% in the biochar, and since the ash will generally not contribute to the higher heating value, this leads to a loss of energy density on a gross mass scale. When the ash content is low to moderate, as with the other three biomass types, the produced biochar will show an obvious energy densification as the thermo chemical conditions intensify. In the case of wood biochar, this energy density is as high as anthracite grade coal, with better burning characteristics but a bulk density that is a lot lower.

The char samples in this research showed elevated to very high pH values in a 0.1 N KCl solution when the HTT reached 600 °C, especially for the straw, green waste and algae biochars. Although this was not determined for the samples in this research, this could be related to the O content of the biochar, as acid groups are often formed by oxygen functionalities at the surface of the biochar. Since the O/C decreases as the HTT is increased, this can be the main reason for the increase of the biochar pH in solution.

The obtained values from the extended BOD testing gives an indication of the degradation rate of biochar under optimal conditions (20 °C, aquatic stirred medium, oxygen supply, very fine biochar). If the recommendation of Lehmann et al. (2009) is followed, it should be assumed that the degradation of the volatile fraction goes a lot faster than the degradation of the stabile fraction. Assuming that the degradation of volatiles does not follow the logarithmic decay profile shown in figure 7 but stays on the rate it is at after the first 14 days, and that the value for g BOD / g VM is the same as the overall BOD value for biochar, it can be calculated that the degradation time for these volatile fractions ranges from 7.1 months (algae, 600 °C, 60 min) to 2.3 years (wood, 450 °C, 60 min), for respectively the fastest and slowest degrading samples. The graphs resulting from the data of this analysis show a typical profile: the respiration peak at the first days of incubation is due to the sieving and rewetting of the soil, which reactivates the soil microbiota, breaks up the aggregates and by doing so, brings the microbial life in contact with readily available C sources. As this easily available C is degraded over time and new material is less bioavailable, the rate decreases exponentially.

The changes to the total respiration rate in the incubation samples were minimal when they are compared to the additional C that was added in the form of biochar. Because none of the C sources were labeled in any way, the total mineralization rate is the only value we can interpret. The addition of biochar can cause changes in the mineralization rate for many reasons:

- Biochar brings additional carbon into the soil. If this is bioavailable and - degradable, the mineralization rate can increase.
- Biochar can also adsorb some of the soil organic material, and by doing so decrease the respiration rate.

- The same input and adsorption theory can be applied to specific compounds that are inhibitory or toxic to the soil microbial community. By adsorbing or supplying these compounds, biochar can also increase respectively decrease the microbial activity.
- The chemical functionality of biochar can greatly influence other parameters in the soil, such as pH. This can dramatically destabilize the microbial ecology in the soil, and reduce their productivity in that way.

These parameters make it hard to interpret the received data. Three things could be noticed, however. The first is the clearly different behavior of green waste char that was incubated: it is the only char showing a positive influence on the mineralization rate after the first week of incubation. Due to practical circumstances, this char had been produced much closer to the start of the incubation than any of the other incubated char types. This could also have had an influence on the outcome.

The second observation is the fact that almost all samples with biochar showed a higher respiration rate than the soil control sample during the last week of incubation. As was said before, a lag phase in the degradation behavior of biochar is always expected, during which the soil microbial life adapts to the new environment that is made by adding biochar. Longer-term incubations could indicate if this effect is significant. As a final important conclusion of this incubation, it can be noted that the algae biochar, which showed the best biodegradability in the previous section, does not show a significantly different behavior from the bulk of the biochar incubations here. This might be attributed to the fact that the BOD determination measures the use rate of $O_2$, while CMR is focused on the produced $CO_2$. Since oxidation is a multi-step process, this might indicate that the organic material in the algae biochar is more accessible, and was more oxidized, yet not mineralized. Another possible explanation for this observation is the fact that the biological oxidation uses a pH correction before the inoculum is added, which could make a great difference in the duration of the lag time.

Depending on individual needs of a certain soil, some general guidelines can be set to produce an appropriate biochar to be used as a soil amendment for this substrate.

Figure 12 gives an idea of the evolution of some important parameters as the HTT increases, using data from the wood biochar sample, produced with a residence time of 10 min. Using this, the main idea for desirable biochar parameters can be summarized as follows:

- A high fixed C content. Since volatile matter will not contribute to the carbon sequestration, but will be mineralized and returned to the air as $CO_2$. To prevent this, it is better to collect these volatiles as much as possible during production and validate them as an energy carrier. This first setting already indicates the following parameter:
- A thorough thermo chemical conversion. Figure 2 indicates that the fixed C yield does not change too much for different temperatures and/or residence times, so the highest content will be achieved under the more stringent conditions.
- A high heating rate to produce the highest possible surface area and pore volume, as these are interesting parameters for the amendment of practically every soil.

Further points of attention during the selection and design of a biochar production for soil amendment may be the pH of the char in solution. An alkaline biochar can be interesting to compensate the pH in much degraded acidic soils, but would only add to the undesirable effect of an alkaline soil. A light activation by oxidation might prove to be effective to overcome this problem, as it is likely to provide O for carboxylic groups to the char surface. The ash content and composition of the input biomass should be checked as well. When a general lack of minerals should be treated, high ash biochars with the right ash composition might bring help, but for most other applications high ash content will probably add little use, or even cause problems as it melts during pyrolysis.

The production of biochars from wood, straw, green waste and algae biomass at four temperatures (300, 450, 600 and 750 °C) and two residence times (10 and 60 min) and the subsequent analysis of several parameters can be concluded in some main observations:

- The algae biochar showed a notably lower yield on daf basis than the other biomass types. Increasing the production temperature or time both had a negative effect on this yield.
- The fixed C yield proved to be practically insensitive to temperature or residence time. Like the overall biochar yield, it showed a lower result for the algae compared to the other biomass types.
- As the HTT increases, the energy density increases in the organic matter that is retained in the biochar.
- Algae biochar showed the highest degradation rate in aquatic biological degradation tests over 14 days.
- A soil incubation which recorded the total C mineralization rate only showed data for the lag period where the soil microculture adapts to the new conditions. This resulted in mineralization rates that indicate a negative effect of biochar addition.
- For the production of interesting biochars, attention should be paid to creating chars with high fixed C content and surface area, which implies using a high HTT and a moderate to high heating rate.

The pyrolytic process as described above in a batch type way and laboratory scale can technically be realized in a continuous working reactor as disclosed in WO2005049530A2.

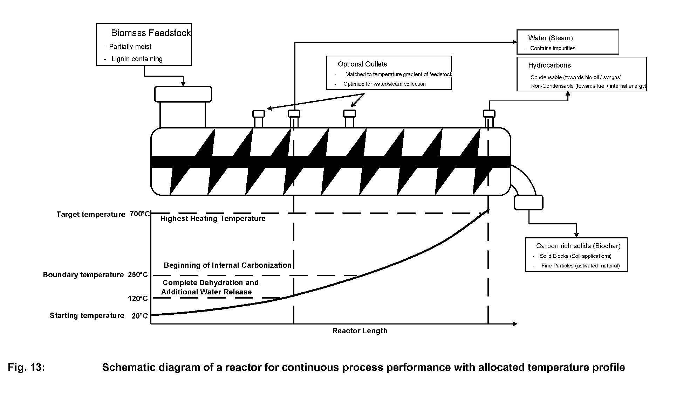

Such retorts comprise at least one screw for conveying biomass through the reactor during pyrolysis. To realize a rising temperature profile during the pyrolytic process, the reactor can be provided with differently tempered heating zones along the biomass travel within the reactor. Figure 13 shows a schematic diagram of a reactor for continuous process performance with allocated temperature profile.

**Abbreviations**

| | |
|---|---|
| BC | black carbon |
| BET | Brunauer-Emmet-Teller |
| BOD | biological oxygen demand |
| C | carbon |
| CEC | cation exchange capacity |
| Cl | chlorine |
| CMR | carbon mineralisation rate |
| CO | carbon monoxide |
| $CO_2$ | carbon dioxide |
| COD | chemical oxygen demand |
| daf | dry and ash-free |
| H | hydrogen |
| $H_2$ | hydrogen |
| H/C | hydrogen/carbon ratio |
| HHV | higher heating value |
| HTT | highest treatment temperature |
| K | potassium |
| MAT | mean annual temperature |
| N | nitrogen |
| $N_2$ | nitrogen |
| O | oxygen |
| $O_2$ | oxygen |
| O/C | oxygen/carbon ratio |
| PM | particulate matter |

S  sulphur

SOM  soil organic matter

TGA  thermogravimetric analyser

VM  volatile matter

VOC  volatile organic compound

WFPS  water filled pore space

**Claims**

1. A method for utilizing biomass, in which the biomass is pyrolysed within a temperature range from 550°C to 750°C to obtain driven-out gas and remaining carbon-rich solids,
**characterized in that**
the biomass used has a lignin content of 10 to 30% by weight and a water content of 5 to 25% by weight, and the residence time of the biomass within said temperature range is 10 to 60 minutes.

2. A method according to claim 1, **characterized in that** biomass used has a lignin content of 15 to 25% by weight and a water content of 10 to 15% by weight.

3. A method according to claim 2, **characterized in that** the biomass used is selected from a group comprising wood pellets, stalk pellets, straw pellets.

4. A method according to any one of the preceding claims, **characterized in that** the biomass is pyrolysed in an oxygen reduced atmosphere compared to air, in particular in an atmosphere which has a content of oxygen not exceeding 10% by volume.

5. A method according to any one of the preceding claims, **characterized in that** the biomass is pyrolysed in an atmosphere which has a content of nitrogen amounting to at least 90% by volume.

6. A method according to any one of the preceding claims, **characterized in that** the biomass is pyrolysed near-anaerobically and is carried out without the addition of air or another atmospheric throughput.

7. A method according to any one of the claims 1 to 5, **characterized in that** the biomass is pyrolysed anaerobically.

8. A method according to any one of the preceding claims, **characterized in that** the biomass used is heated from ambient temperature to a target temperature in the range from 550°C to 750°C, the gas driven out below a boundary temperature in the range from 120° to 250°C is utilized as steam, and the gas driven out above the boundary temperature is freed of condensable constituents which are utilized as oil and/or tar and the uncondensable constituents are utilized as fuel gas.

9. A method according to claim 8, **characterized in that** oil obtained from said condensable constituents is utilized for producing synthesis gas.

10. A method according to claim 9, **characterized in that** oil obtained from said condensable constituents meets the specification to be used as a feedstock for the production of synthesis gas in current industrial installations.

11. A carbon-rich solid, obtainable by a method according to any one of claims 1 to 10, **characterized in** a carbon content of 75 to 99% by weight.

12. A carbon-rich solid according to claim 11, **characterized in that** its content of fixed carbon measured by TGA-analysis method is amounting to 75 to 95% by weight.

13. The use of the solids obtainable by a method according to any one of claims 1 to 10 as a soil amendment.

**14.** The use of the solids obtainable by a method according to any one of claims 1 to 10 as an adsorbent.

**15.** A method for reducing the amount of $CO_2$ within the Earth's atmosphere, **characterized in** the following steps:

a) cultivating plants providing a biomass with a lignin content of 10 to 30% by weight;
b) harvesting said plants and separating said biomass therefrom;
c) drying said biomass when indicated to obtain a biomass with a water content of 5 to 25% by weight;
d) performing a method according to any one of claims 1 to 10 to obtain a carbon-rich solid from said biomass;
e) storing of said carbon-rich soild in the soil.

(a) Gas preheating
(b) Pyrolysis reactor
(c) Feed lock hopper
(d) Spiral condensor in ice water bath
(e) Gas filter to eliminate aerosols
(f) Volumetric gas meter

**Fig. 1: Scheme of the pyrolysis setup**

**Fig. 2:** Effects of HTT and residence time on the yields and fixed C content. The empty and solid symbols represent 10 and 60 min residence time, respectively.

**Fig. 3:** Relation of the molar H/C ratio to the HTT of biochar

**Fig. 4:** Relation of the molar H/C ratioto the fixed-C content of biochar

**Fig. 5:** Relation of the biochar higher heating value to the fixed-C content

**Fig. 6:** Relation of the biochar pH to the HTT

**Fig. 7:    Biological oxygen demand evolution during the test period**

**Fig. 8:    Relation of final oxygen demand to the volatile matter content**

**Fig. 9:** Biochar mineralisation: influence of HTT on mineralisation rate. Error bars show standard errors (n = 3)

**Fig. 10:** Biochar mineralisation: influence of input material on mineralisation rate. Error bars show standard errors (n = 3)

**Fig. 11:** Biochar mineralisation: inuence of HTT and input material on cumulative mineralisation, compared to cumulative respiration of the soil

**Fig. 12:** Response of biochar parameters (biochar yield, fixed C content, pH, BET surface area and H/C ratio) on the HHT. Data of wood biochar with 10 min residence time

**Biomass Feedstock**
- Partially moist
- Lignin containing

**Optional Outlets**
- Matched to temperature gradient of feedstock
- Optimize for water/steam collection

**Water (Steam)**
- Contains impurities

**Hydrocarbons**
- Condensable (towards bio oil / syngas)
- Non-Condensable (towards fuel / internal energy)

**Carbon rich solids (Biochar)**
- Solid Blocks (Soil applications)
- Fine Particles (activated material)

Target temperature 700°C    **Highest Heating Temperature**

**Beginning of Internal Carbonization**

Boundary temperature 250°C

**Complete Dehydration and Additional Water Release**

120°C

Starting temperature 20°C

**Reactor Length**

Fig. 13:      Schematic diagram of a reactor for continuous process performance with allocated temperature profile

Europäisches
Patentamt

European
Patent Office

Office européen
des brevets

**EUROPEAN SEARCH REPORT**

Application Number

EP 10 19 2317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Saran Sohi; Elisa Lopez-Capel; Evelyn Krull and Roland Bol: "Biochar, climate change and soil: A review to guide future research", CSIRO Land and Water Science Report, 1 February 2009 (2009-02-01), XP007918200, Retrieved from the Internet: URL:http://www.csiro.au/files/files/poei.pdf [retrieved on 2011-04-08] * table 2 * * para 2.1.3.4 * * figures 1,2,10 * * para 3.2.4 * | 1-15 | INV. C10B53/02 B01J20/20 C09K17/02 |
| X | MASCHIO G ET AL: "Pyrolysis, a promising route for biomass utilization", 1992, BIORESOURCE TECHNOLOGY 1992 GB, VOL. 42, NR. 3, PAGE(S) 219 - 231, XP002632369, * tables 1-4 * | 1-15 | |
| X | KWAPINSKI W ET AL: "Biochar from biomass and waste", WASTE AND BIOMASS VALORIZATION JUNE 2010 SPRINGER NETHERLANDS NLD, vol. 1, no. 2, June 2010 (2010-06), pages 177-189, XP002632370, DOI: DOI:10.1007/S12649-010-9024-8 * figures 3,6 * * tables 1-3 * * abstract * * para 2.1, 3.1 and 4.1 * | 1-15 | TECHNICAL FIELDS SEARCHED (IPC) C10B B01J C09K |
| A | US 4 530 702 A (FETTERS WAYNE A [US] ET AL) 23 July 1985 (1985-07-23) * the whole document * | 1-12 | |

The present search report has been drawn up for all claims

| Place of search | Date of completion of the search | Examiner |
|---|---|---|
| The Hague | 12 April 2011 | Zuurdeeg, Boudewijn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 19 2317

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2011

| Patent document cited in search report | | Publication date | Patent family member(s) | Publication date |
|---|---|---|---|---|
| US 4530702 | A | 23-07-1985 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080317657 A1
- CN 1752054 A
- WO 2004037747 A2
- JP 1028861 A
- WO 2008076944 A
- WO 2005049530 A2

**Non-patent literature cited in the description**

- **SOHI, S. ; LOEZ-CAPEL, E. ; KRULL, E. ; BOL, R.** Biochar's roles in soil and climate change: A review of research needs. *CSIRO Land and Water Science Report 05/09,* 2009, 64
- **ANTAL, M. J. J. ; GRONLI, M.** The art, science, and technology of charcoal production. *Industrial and engineering chemistry research,* 2003, vol. 42 (8), 1619-1640
- **CHENG, C.-H. ; LEHMANN, J. ; THIES, J. E. ; BURTON, S. D. ; ENGELHARD, M. H.** Oxidation of black carbon by biotic and abiotic processes. *Organic geochemistry,* 2006, vol. 37 (11), 1477-1488
- **CHENG, C.-H. ; LEHMANN, J.** Ageing of black carbon along a temperature gradient. *Chemosphere,* 2009, vol. 75 (8), 1021-1027
- **HAMER, U. ; MARSCHNER, B. ; BRODOWSKI, S. ; AMELUNG, W.** Interactive priming of black carbon and glucose mineralization. *Organic geochemistry,* 2004, vol. 35 (7), 823-830
- **KUZYAKOV, Y. ; SUBBOTINA, I. ; CHEN, H. ; BOGOMOLOVA, I. ; XU, X.** Black carbon decomposition and incorporation into soil microbial biomass estimated by 14c labeling. *Soil biology & biochemistry,* 2009, vol. 41 (2), 210-219
- **CHENG, C.-H. ; LEHMANN, J. ; ENGELHARD, M. H.** Natural oxidation of black carbon in soils: changes in molecular form and surface charge along a climosequence. *Geochimica et cosmochimica acta,* 2008, vol. 72 (6), 1598-1610
- **GAVIN, D. G. ; BRUBAKER, L. B. ; LERTZMAN, K. P.** Holocene fire history of a coastal temperate rain forest based on soil charcoal radiocarbon dates. *Ecology,* 2003, vol. 84 (1), 186-201
- **PRESTON, C. M. ; SCHMIDT, M. W.** Black (pyrogenic) carbon: a synthesis of current knowledge and uncertainties with special consideration of boreal regions. *Biogeosciences,* 2006, vol. 3 (4), 397-420